(19)

Europäisches
Patentamt
European
Patent Office
Office européen
des brevets

(11)     **EP 2 105 263 A2**

(12)     **EUROPEAN PATENT APPLICATION**

(43) Date of publication:
   **30.09.2009  Bulletin 2009/40**

(51) Int Cl.:
   **B25J 9/16** (2006.01)

(21) Application number: **09464001.8**

(22) Date of filing: **04.03.2009**

(84) Designated Contracting States:
   **AT BE BG CH CY CZ DE DK EE ES FI FR GB GR
   HR HU IE IS IT LI LT LU LV MC MK MT NL NO PL
   PT RO SE SI SK TR**
   Designated Extension States:
   **AL BA RS**

(30) Priority: **27.03.2008  RO 200800232**

(71) Applicant: **Institutul de Mecanica Solidelor al
   Academiei
   Romane
   Bucuresti, Cod 010141 (RO)**

(72) Inventors:
   • **Vladareanu, Luige
     Bucuresti (RO)**
   • **Velea, Lucian Marius
     Bucuresti (RO)**
   • **Munteanu, Radu Loan
     Judet Cluj (RO)**
   • **Curaj, Adrian
     Judet Lifov (RO)**
   • **Cononovici, Sergiu
     Bucuresti (RO)**
   • **Sireteanu, Tudor
     Bucuresti (RO)**
   • **Capitanu, Lucian
     Bucuresti (RO)**
   • **Munteanu, Mihai Stelian
     Cluj (RO)**

(54)   **Real time control method and device for robots in virtual projection**

(57)   The method and the device of real time control with robot open architecture are meant to improve the control performance with applications in control systems for nano/micro/macro handlers/robots. The method and the device are comprised of a virtual control interface module (ICV) with the role of achieving the virtual projection of the mechanical structure on the computer graphic terminal (TGC), which has m position and force signals $X_m^P$ and $X_m^F$, a classic mechatronic control system (SCMC) with the role of ensuring the robot's real time control, a number of m charge actuator modules rigidly coupled with the m servo-actuator modules (MS) with the role to ensure the functioning in charge of the servo-actuator modules (MS) and controlled by a charge controller module (MCS), a multi function control interface module (ICMF) which ensures the real time control, the priority control and the management of information exchange between an n number of functions of control interfaces (ICF), connected between them through a field bus (MD), with the role to ensure the implementation of various control methods, making an open architecture system (OAH) in the robot control, a number of n functions of control interfaces (ICF) with the role of allowing the implementation various control methods such as the hybrid force-position control, line tracing functions, the tripod walk of a stepping robot, compliant control, etc. Thus we obtain the design, testing and experimenting control method on a real control system, with online functioning, in the absence of the mechanical structure, through virtual projection, thus allowing the improvement of the performance in the control of robots that already physically exist.

Fig.2. Virtual projection of a walking hexapod robot

EP 2 105 263 A2

## Description

The invention refers to a real time control method and device with robots open architecture, meant to improve control performance, with applications in the creation of control systems for nano/micro/macro handlers/robots.

In order to improve the performance in real time robot control there are several technical methods and solutions known, generally called virtual instrumentation, CAD (Computer Aided Drafting), etc. through which a mathematical pattern is created for the control system and through a computer simulation with high computing power and numerous mathematical functions, the functioning of the control system is virtually tested.

Mathematical models with 3D geometric projections developed in CAD systems can be the foundation of other functions in CAE and CAM, which may lead to structure analysis, assembly analysis, interface control, kinematics analysis. These analyses with 3D virtual models may lead to studies and simulations of products in various function conditions, with the possibility to redefine and optimize the process, without actually creating the product or the physical control system.

An example of projection using virtual reality is shown in the article "Virtual assembly using virtual reality techniques" Computer-Aided Design, Volume 29, Issue 8, August 1997, pg. 575-584, Sankar Jayaram, Hugh I Connacher, Kevin W Lyons. Virtual reality is defined as using a computer and the associated hardware virtually generated medium in order to give the illusion of a physical presence in that environment. Virtual reality is a technology reported to a natural extension of the 3D computerized graphics with advanced input and output devices, to realize prototypes of products, leading to development in computer assisted engineering (CAD). Design in a virtual environment implies using software components (computer tools) to achieve or assist engineering decisions reported to analysis design, prediction models, data visualization and presentation without the physical presence of the product, the control system or the process.

Another work, "Application of Virtual Assembly Tools for Improving Product", A. C. K. Choi, D. S. K. Chan, M. F. Yuen, The International Journal of Advanced Manufacturing Technology, Issue: Volume 19, Number 5 / March, 2002 , Friday, March 15, 2002, pg. 377-383, ISSN 0268-3768, DOI: 10.1007/s001700200027, presents the DYNAMO method of design and investigation in a virtual environment using modelling components of three dimension bodies in 99, with SolidWorks ' ROBFACE and ROBCAD files.

These methods allow the access to design and the achievement of many industrial processes and devices: robots, handlers, machinery, assembly devices, transfer lines having as main feature the development of the entire application in a virtual environment of the product, the process and the control system, mathematically modelled through various control functions.

**The disadvantage of these technical methods and solutions** mainly consists in the fact that the mathematical robot control pattern is designed, tested and experimented using virtual mathematical models of the control system that only contain certain parameters of these, in most cases without taking into account the correlation between them and the influence of other input signals or jamming signals which appear in the real time control system, which leads to the drastic decrease of the performance after the implementation in the real time control system.

**The problem this invention solves** consist in the fact that it allows the design, the testing and the experiments of control methods on a real time control system, with online functioning, in the absence of the mechanical structure, through virtual projection, thus allowing the improvement of the performance of robot control systems which are already physically in being.

**The method according to the invention** removes the disadvantages mentioned above in the way that in order to improve the performance in the control of nano/micro/macro handlers and robots, in the absence of the mechanical structure, it ensures the design, the testing and the experiments of control methods on a classic mechatronic control system (already existing), without needing to modify its hardware structure, by going through the following phases in the development of the respective control system:

(i) the virtual projection of the mechanical structure is made, mathematically determined, on the graphic terminal of a computer, through a computer virtual control interface, which allows the mathematical modelling for the graphic representation of the mechanical structure, and which consists of the graphic representation of the movement trajectory, real and of reference, on each axis of the component elements, as well as of the forces, real and of reference, in the joints of the mechanical structure, a representation obtained by (1) the interpretation of the data generated by the measure, position and force transducers, coupled on the robot's actuators, and (2) of the reference signals of position and force for the robot control system;

(ii) a database(s) is generated for the scaled storage of input signals, which would allow the visualization, in real time or in play-back with a modified speed of the details of the movement of the mechanical structure;

(iii) the development of an open architecture control system, composed of the robot classic control system in which the generation of the movement trajectory and of the forces is done through classic control methods, such as the Denevit-Hartenberg method and/or the teach-in method, to which a hybrid position-force control force is added;

(iv) the development of the control system with an open architecture by adding an interface with line tracing functions;

(v) the development of the open architecture control system by adding an interface with the robot's walking style such as the tripod walk at a walking robot;

(vi) the development of the open architecture control system by adding other interfaces with control methods such as the control of the weight centre, the orientation through image adaptation;

(vii) generating position and force references at the classic robot control system by data exchange between the interfaces shown in the sequences (iii) - (vi) based on mathematical patterns such as the method of data inference, the fuzzy method;

(viii) the charge free functioning of the robot's servo-actuators, which corresponds to the movement of a robot in state of imponderability, and the repetition of sequences (ii) - (vii) until the performance in the robot control, respectively the errors between the reference movements and the movements resulted through virtual projection, enter the desired error range;

(ix) functioning with a constant charge of the robot's servo-actuators, controlled by a charge controller module and the repetition of sequences (ii) - (vii) until the performance in the robot control, respectively the errors between the reference movements and the movements resulted through virtual projection, enter the desired error range;

(x) functioning with varying charge of the robot's servo-actuators, which corresponds to a real movement of a robot with charge fluctuations due to the environment, controlled by a charge controller module, by processing the $X_R^S$ signals with varying values generated based on previous measurements by the multi-function control module in correlation with the $X_R^P$ position and $X_R^F$ force references, with the repetition of sequences (ii) - (vii) until the performance in the robot control, respectively the errors between the reference movements and the movements resulted through virtual projection, enter the desired error range.

**The device according to the invention** eliminates the mentioned disadvantages in the way that it is composed of a virtual control interface module with m inputs, the position and force signals received from m measure transducers modules of the actuators, where m is the autonomy degrees of the robot, and the reference signals, position and force, received from the virtual control interface module, with the role of achieving the virtual projection of the mechanical structure on the computer graphic terminal and the database(s) generation for the scaled storage of input signals, a computer graphic terminal module receives the position and force information from the virtual control interface module and through a software program ensures the graphic representation in the robot's moving space with the role of analysis of the movement of the mechanical structure and the adjustment of the control parameters of the classic mechatronic control system, a number of m measure transducer modules transform the positions on the m autonomy degrees and the forces in the m joints of the robot in measure signals and sends them to the virtual control interface module, a classic mechatronic control system receives the position and force reference signals from the multi function control interface module, m signals of actual positions of the mechanic structure and m signals of actual forces in the joints of the mechanical structure and sends m control signals of the m servo-actuator modules, with the role of ensuring the robot real time control, a number of m servo-actuator modules with the role of ensuring the drive of the mechanical structure of the robot in the implementation phase, which receive control signals from the classic mechatronic control system, on which the m measure transducer modules are coupled, which are also rigidly coupled to m charge actuators, a number of m charge actuator modules rigidly coupled to the m servo-actuator modules, which receive control signals from a charge controller module with the role to ensure the charge functioning of the m servo-actuator modules, a charge controller module which receives the position and force reference, as well as a reference signal to generate the charges of the servo-actuator modules, from the multi function control interface with the role of ensuring the real time control and the charge functioning of the m charge actuator modules, a multi function control interface module which generates the force and position references to the classic mechatronic control system, ensures real time control, priority control and the management of the information exchange between a number of n function control interfaces, connected between them through a field bus with high speed communication to which the communication with the classic mechatronic control system is added, with the role of ensuring, through control interfaces functions, the implementation of various extra control methods as compared to those ensured by the classic mechatronic control system, based on mathematic modelling, such as the method of data inference, the fuzzy method, ensuring an open architecture in the robot control, a number of n interface of function control which ensure the development of a control system with open architecture by adding a number of n extra functions of control to the ones ensured by the classic mechatronic control system, communicate between them, together with the multi function control interface module, through a field bus with high speed communication with the role of allowing the implementation of various control methods such as the hybrid force-position control, line tracing functions, the tripod walk of a stepping robot respectively other control methods such as the centre weight control, orientation through image adaptation.

**The invention has the advantage** of allowing the design, the testing and the experiments of control methods on a real control system of nano/micro/macro handlers and robots in the absence of the mechanical structure, with the possibility of improving the performance through virtual projection and movement analysis, allowing an extra development of new control methods such as the hybrid force-position control, line tracing functions, the tripod walk of a stepping robot, compliant control, centre weight control, orientation through image adaptation and other functions, without needing to modify the hardware structure of the classic mechatronic control system.

The invention allows the creation of new control systems of nano/micro/macro handlers and robots with higher performance, at a low cost and design period, a significantly reduced achievement. Moreover, it offers engineers and designers the possibility to design more details and enhanced resolution, of parts of increased complexity of nano/micro/ macro handlers, robots and availability for computational processing power, graphic representation, method interface, mathematic modelling, visualization at much higher levels.

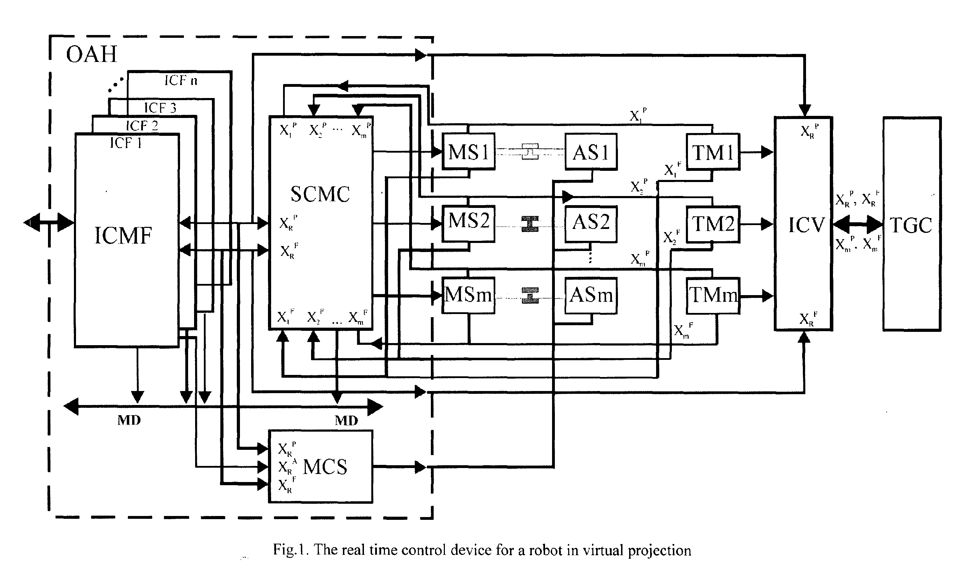

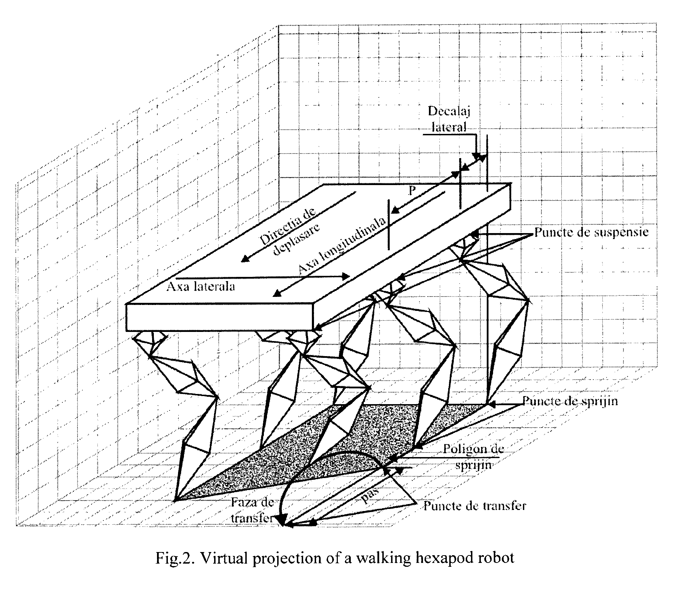

**An example is given in the following of an achievement of the invention**, related to fig. 1, which shows a principle blueprint of the device and figures 2 which show an example of virtual projection of a hexapod stepping robot. The method and the device according to the invention are comprised of an ICV virtual control interface module which has: (1) **m** inputs, $X_m^P$ position and $X_m^F$ force signals received from m TM measure transducer modules, where m is the robot's autonomy degrees, (2) $X_R^P$ position and $X_R^F$ force reference signals received from the ICMF multi function control interface module with the role of achieving the virtual projection of the mechanic structure on the TGC computer graphic terminal and the generation of the database(s) for the scaled storage of input signals. A TGC computer graphic terminal module receives the $X_m^P$ position and $X_m^F$ force information from the ICV virtual control interface module and through a software program ensures the graphic representation in the robot's movement space with the role of analysis of the movement of the mechanical structure and adjustment of the control parameters of the SCMC classic mechatronic control system.

An example of virtual projection is shown in figure 2, in which are computed, starting from the angles and the dimensions of the segments and taking into account the status of the support point, the coordinates of the heads of each segment of the robot with graphic representation in the three dimension coordinate system. The application allows: the representation of the model of the stepping robot in a three dimension axes system, with options to rotate the virtual camera which watches the robot in a certain angle, around this angle, and respectively from near or far of that point, the manual and automatic control of the robot on each movement axis as well as logging its moves, the possibility to generate the movement trajectory by loading an excel file, to generate with delay the robot's movement between two sets of subsequent data, which allows a better analysis of the details of the movement of the feet or the platform of the robot; the shown application is developed in the C# language in the Microsoft Visual Studio development medium and uses the DirectX class libraries. The execution launch mode is either through an icon on the desktop, or by accessing the Start Programs menu. Finally, the program allows the saving as excel files of the x, y and z coordinates of the end of every foot as well as of the x, y and z coordinates of the platform.

**A number of m TM measure transducer modules** turns the $X_m^P$ positions on the m autonomy degrees and the $X_m^F$ forces in the m joints of the robot into measure signals and sends them to the ICV virtual control interface module. A SCMC classic mechatronic control system receives the $X_R^P$ position and $X_R^F$ force reference signals from the ICMF multi function control interface module, m actual position signals $X_m^P$ of the mechanical structure and m actual force signals $X_m^F$ in the joints of the mechanical structure and sends m control signals of the m MS servo-actuator modules with the role of ensuring the robot real time control.

In the following an example of a SCMC classic mechatronic control system is given, which shows the complexity of the control process of robots and the technologic capability of achieving a module. This allows the control of the position through the Denevit-Hartenberg method, using the kinematics transformation. In order to control a robot two systems of main coordinates are defined: the Cartesian coordinates and the robot coordinates. The robot coordinates represent the angle between the reference axis for each autonomy degree and the extension of the axis and are generated by the TM1-TMm measure transducers. They form the coordinates in which the robot moves with a direct drive from the **MS1-MSm** servo-actuators of the robot. The position and the orientation of each segment, reported to the structure of the robot's axes, can be described by the Denavit - Hartenber transformation. For the determination of the transformation matrix it is assumed that the Z axis in each frame (respectively the movement surface of the robot reported to its own axis) is the rotation axis.

As a concept, the control using direct kinematics consists of turning the current robot coordinates, directly resulted from the measure transducers of each TM1-TMm axis, into Cartesian coordinates and the comparison with the $X_R^P$ target to be reached in Cartesian coordinates (the movement reference). Using the Jacobi inverse matrix, we can ensure the transformation from Cartesian coordinates into robot coordinates of the position error, which allows the generation of angle errors for the direct control of the **MS1-MSm** servo-actuators on each movement axis. For mathematical modelling, the position and the orientation of the final action element of a robot with six degrees of autonomy, reported to the corresponding coordinates of the movement axes are given by a matrix in Cartesian coordinates $X_C$ by the relation:

$$X_C = A_1 * A_2 * A_3 * \text{.........} * A_6$$

Where $A_1$, $A_2$, $A_3$ ......... $A_6$ is the matrix of the Denevit-Hartenberg transformation which ensures the transformation of a point in the robot space in the current Cartesian coordinates into Cartesian coordinates of the following axis. The position error in Cartesian coordinates is obtained as a difference between the $X_R^P$ reference position (desired) generated by the ICMF multi function control interface module and the current position $X_1^P$, $X_2^P$..., $X_1^P$. The difficulty in the control of the robot's trajectory stands in the fact that the $X_C$ generated positions and the $\delta X$ position error are given in Cartesian coordinates while the continuous measurement of the robot's position $\theta_{1,2,....6}$ and the actuator command angle error $\delta\theta_{1,2,....6}$ must be given in robot coordinates. The relation between the position and the orientation of the conductive element of the robot generated in Cartesian coordinates and the axes' angles in robot coordinates $\theta_1$, $\theta_2$, .... $\theta_6$ is:

$$x_i = f_i(\theta),$$

where $\theta$ is the vector which represents the angle position on all autonomy degrees expressed in robot coordinates. Through differentiation we obtain:

$$\delta^6 X_6 = J(\theta) * \delta\theta_{1,2,....6}$$

Where $\delta^6 X_6$ represents the application of the differential operator to linear and angle changes of the current position $X_C$ of the conductive element expressed in Cartesian coordinates and $\delta\theta_{1,2,....6}$ represents the application of the differential operator to the angle set expressed in robot coordinates. $J(\theta)$ is the Jacobi matrix in which the $a_{ij}$ elements satisfy the relation:

$$a_{ij} = \delta f_{i-1} / \delta\theta_{j-1}$$

where i, j correspond to vectors $x_i$ respectively $\theta_j$. The inverse Jacobi matrix turns the current position from Cartesian coordinates $\delta^6 X_6$ respectively $\delta X$ into an angle error corresponding to robot coordinates $\delta\theta$ according to the relation:

$$\delta\theta_{1,2,...6} = J^{-1}(\theta) * \delta^6 X_6$$

The Jacobi computation consists of consequent multiplication of the $X_C$ matrix corresponding to the Denevit-Hartenberg transformation of the robot. The vector of the angle error $\delta\theta$, thus obtained, is used as a direct control signal to drive the robot's **MS1-MSm** servo-actuator modules.

**In the following, the device according to the invention** is comprised of a number m of MS servo-actuator modules with the role of ensuring the drive of the mechanical structure of the robot in the implementation phase, which receive control signals from the SCMC classic mechatronic control system, on which the **m TM** measure transducer modules are coupled and which are rigidly coupled to **m AS** charge actuators. Also, a number of **m AS** charge actuator modules rigidly coupled to the **m MS** servo-actuator modules receive control signals from a **MCS** charge controller module with the role to ensure the charge functioning of the **m MS** servo-actuator modules. An **MCS** charge controller module which receives the $X_R^P$ and $X_R^F$, position and force reference and a $X_R^S$ reference signal to generate charges to MS servo-actuator modules, from the **ICMF** multi function control interface with the role to ensure the real time control and the charge functioning of the **m MS** charge actuator modules. For the functioning in constant charge of the robot's servo-actuators, the $X_R^S$ reference has a constant value for each movement axis of the robot, preset by the operator, which will lead to a constant charge in each joint of the robot. For the functioning in variable charge of the robot's servo-actuators, the $X_R^S$ reference has variable values generated based on previous measurements and depends on the position and force, $X_R^P$ and $X_R^F$, reference.

**A number of n ICF interface control functions** which ensure a number of n supplementary control functions to the ones ensured by the **SCMC** classic mechatronic control system, communicate between them, together with the ICMF multi function control interface, through an **MD** fieldbus, with high speed communication, with the role to allow the implementation of various control methods, such as the hybrid force-position control, line tracing functions, the tripod walk of a stepping robot respectively other control methods such as the center weight control, orientation through image adaptation. Here follows an example of function of hybrid force-position control of a hexapod stepping robot, which shows the technological capability of accomplishing the module. The generalized area on which the robot works may be defined in a constrained space with 18 autonomy degrees **(DOF)**, with constraints of the $X_C$ position along the normal to this surface and constraints of the $F_C$ force along the tangents. Considering $X_C$ and $F_C$ expressed in specific environment coordinates we can determine the selection matrix $S_x$ and $S_f$, which are diagonal matrix with 0 and 1 diagonal elements and which satisfy the relation: $S_x + S_f = I_d$. The $I_d$ matrix represents the unit matrix with 1 on the diagonal and 0 for the rest. **ICF** control interface functions to achieve the hybrid force-position control divides in two sets the $\Delta X_P$ deviation measured in Cartesian coordinates for a **SCMC** classic mechatronic control system: $\Delta X^F$ - corresponding to the component controlled by force $X_1^F$, $X_2^F$ ...... $X_m^F$ and $\Delta X^P$ - corresponding to the control in position $X_1^P$, $X_2^P$ ...... $X_m^P$ cu axes drive according to selection matrix $S_f$ and $S_x$. If only the position control $X_1^P$, $X_2^P$ ...... $X_m^P$ is considered on the directions established by the $S_x$ selection matrix, the ICF interface control functions will determine both the desired differential moves in the robot environment corresponding to the position control in the relation: $\Delta X_P = K_P \Delta X^P$, where $K_P$ is the win matrix, and the angles of the desired move on the axes controlled in position:

$$\Delta\theta_P = J^{-1}(\theta) * \Delta X_P.$$

Further on, taking into account the control of the force on the other directions left, the relation between the desired angle move on the robot axes, and the $\Delta X_F$ force error is given by the relation:

$$\Delta\theta_F = J^{-1}(\theta) * \Delta X_F,$$

Where the position error due to force $\Delta X_F$ is the movement difference between $\Delta X^F$ - the deviation of the current position measured by the **SCMC** classic mechatronic control system and processed by the **ICMF** multi function control interface module and $\Delta X_D$ - the position deviation due to the desired residual force. Writing $F_D$ the desired residual force and $K_W$ physical rigidness we obtain the relation: $\Delta X_D = K_W^{-1} * F_D$. Thus, $\Delta X_F$ can be calculated from the relation: $\Delta X_F = K_F (\Delta X^F - \Delta X_D)$, where $K_F$ is the dimensional relation of the rigidness matrix. Finally, the movement variation results on the robot axes reported to the variation of the movement in the robot environment, according to the relation:

$$\Delta\theta = J^{-1}(\theta)\,\Delta X_F + J^{-1}(\theta)\,\Delta X_P.$$

We can see that the **ICMF** multi function control interface module executes the two control ways as competitive processes. Also, the **TM1-TMm** measure transducers are used in two manners: in the position control, the information obtained from the transducers is used to compensate the deviation from the robots' joints, due to the load created by external forces, so that it stresses the apparent rigidness of the system of joints of the robot. In the force control, the joint is used as a force transducer, so that the robot be led into the same direction as the force received from the transducers, allowing that the desired contact force be maintained.

Another example refers to the creation of an **ICF** control interface with tracing functions of a contour surface. Stepping robots with transport activities or irregular terrains need extra functions of compliance in order to correct positioning errors, to relax the tolerance between components and to absorb impact forces with elements in the robot environment. For these reasons the **OAH** open architecture automation system, must ensure the achievement of a compliant adaptability. The tracing process is done on one of the robot axes with force control on the other two axes. The monitoring is done through the movement along the robot's leg, keeping contact in the other 2 directions. The contact forces are controlled on directions **Z** and **X**, and the movement along **Y** is controlled through position. The monitoring process of the stepping robot movement may be divided in three phases: proximity, searching and platform movement. The proximity phase: the robot approaches the edge with a specified $v_a$ speed, with the position control on all axes according to a control process in position. When a sensor of the detector has contact with the support surface, a contact force is detected. Through the detected force, with the help of the force transducer, the movement in this direction is stopped and the control system will ensure: a) the force control in that direction and b) the position control in all the other directions. The searching phase: at the end of the proximity phase, an arm of the detector is in contact with the support surface and the other arm in the proximity of the support surface. In this case, corresponding to the searching phase, the command system will generate for the proximity, a perpendicular movement trajectory with a specified $v_s$ searching speed. When this part of the detector is also in contact with the support surface, the searching phase ends and the force control is assigned in the direction of the robot's walk. The platform movement phase: when the other two phases ended, the support surface is in contact with the leg's detector. From this moment on the platform movement phase begins with the controlled force in the normal directions of two surfaces, and the position is controlled in the direction of the movement of the robot's platform. The implementation of the method in the open architecture automation system **OAH** can be achieved in real time, without any modifications of the hardware of the **SCMC** classic mechatronic control system, or of the **ICMF** multi function control interface module, the introduction of a new **ICF** control interface function, in the shape of a task, being enough, in the structure of the **OAH** open architecture automation system. The role of this task is to generate the positions and the forces according to the presented tracking algorithm. In the creation of the **ICF** control interface with tracing functions of a contour surface, we took into account the fact that the contact force must be chosen according to the load requirements, and the physical rigidness of the compliant device is different on each contact direction, which determines different deviations, from and around each axis.

**Finally, an ICMF multi function control interface module** which generates the $X_R^P$ and $X_R^F$, position and force reference to the **SCMC** classic mechatronic control system, ensures real time control, priority control and the management of the information exchange between a number **n** of **ICF** control interface functions, connected between them through an **MD** data fieldbus with high speed communication to which the communication with the **SCMC** classic mechatronic control system is added, with the role of ensuring, through **ICF** control interface functions, the implementation of various extra control methods to the ones ensured by the **SCMC** classic mechatronic control system, thus creating an **OAH** open architecture automation system in the robot control. The generation of position and force references to the robot's classic control system is done based on mathematical models such as the data inference method, the fuzzy method.

**Further on, an example of mathematical model** is shown, which demonstrates the technological capability of achieving the **ICMF** multi function control interface module. This consists of a fuzzy control of several **ICF** control interface functions. In a simplified case, we consider an interface of functions control in position $X_1^P, X_2^P ..... X_m^P$ and another interface of function control in the $X_1^F, X_2^F ..... X_m^F$ force, on two different levels of decision, in order to determine the movement speed of the detector (foot) of a robot. The fuzzy control on two or more decision levels has multiple rule bases where the result of an inference of the rules base is transmitted to the next level. Thus the most important dimensions of the inference may be grouped into smaller sets and combined with the basic rules. In the fuzzy structure thus defined, the results of the rule base of the **P** position scale are transmitted to the base of **PF** position-force control rules. This structure is similar to a hierarchic structure of regulators based on features. In terms of control, based on the features of the positioning functions, P is high level and ensures the control of the **OAH** open architecture automation system. When dynamic jamming appears or commands are generated, the main function is the force. Generally, this controls the system to avoid instability. The control returns the **P** function base when the system dynamics becomes stable. The basic idea of the controller is to ensure the speed on each axis for the given deviation in the corresponding direction heuristically, in which a human operator could ensure the movement of the robot on irregular support surfaces. The purpose of the **ICMF** multi function control interface module is, in this case, to assign the measured deviation of the fuzzy variables, such as positive high **(PM),** and to assess the decision rules through inference, so that in the end the value of the exit variable may be established, for instance speed as a fuzzy variable, which follows best the controlled parameter. The shape of the decision rule and the fuzzy variables used in making the decision depend on the problem of the specific control. We consider the deviation in the position of the e compliant joints, the rate of the position deviation $\Delta e$ and the contact force $\Delta f$ as entry data. The values of the deviations detected through **TM1-TMm** measure transducers are quantified, in the **ICMF** multi function control interface module, in a number of points corresponding to the elements of the universe of discourse, and then the values are assigned as degree of appurtenance in a few fuzzy subsets. The relation between entries, for instance the measured deviations, or outputs, such as speeds, and the appurtenance degree may be defined in compliance with the experience of the operator and the requirements of the task. Empirically we define the appurtenance functions for all the input and output elements. The fuzzy values were chosen as follows: **NM -** high negative, $N_M$ - medium negative, **Nm -** low negative, **ZO** - zero, **Pm**-low positive, **PM**-high positive. From the analysis of the rule base it can be seen that the reaction loop in the force depends on the results of the inference in the fuzzy control of the P component. The **P** rule base can be easily modified from a typical, linear rule base, allowing the replacement of all the zero **ZO** values with the exception of the centre of the rule base. This way, the P rule base will pass the **ZO** value only when the system is stable, which means that both the error and the changes of the error terms correspond to the **ZO** field. For a certain entry set, for instance the measured deviation, the assessment of the fuzzy rules produces a fuzzy set of appurtenance degrees for the actions of weight control generated by the **ICMF** multi function control interface module. In order to start a concrete action one of these values must be chosen. The control value with the highest degree of appurtenance was selected. The rules are evaluated at equal intervals, similarly to a conventional control system. The result of the logical inference also represents fuzzy values which apply to the defuzzy module. The defuzzyfication represents a transformation of the fuzzy values defined on the universe of discourse of the output in a numeric value. This process is necessary because the control in the case of the fuzzy regulators is only done with cryptic values. Choosing as defuzzyfication method the method of the area center weight, the computation of the defuzzyficated outputs is given by the relation:

$$O \rightarrow o_{crisp} = \frac{\int_U u \cdot \mu_0(u)\,du}{\int_U u \cdot \mu_0(u)\,du}$$

For a discrete universe of discourse of the U output, the relation of computation of the center weight is reduced to the relation:

$$O \rightarrow o_{crisp} = \frac{\int_U u \cdot \mu_0(u)\,du}{\int_U u \cdot \mu_0(u)\,du}$$

The choice of a discrete discourse universe allows the use of a **ICMF** multi function control interface to generate output fuzzy variables with a reduced process time. By applying the fuzzy logical control, we obtain a smooth passage, without interruptions, from the position control to the control in position and force. Moreover, we obtain a fast answer of the control loop, and the instability is basically eliminated.

**The proposed patent is based on numerous inter-disciplinary studies** with contributions in fundamental research and technology capabilities in various fields: nuclear industry for the transportation of nuclear materials, medical assistance for the handicapped, agriculture and forest care, inspections in hazardous areas, nano-micro technologies, etc. The real time control system with the **OAH** open architecture ensures flexibility, fast response, precision in reaching goals and repeatability in the execution of movement programs of the robot with the complete elimination of closed systems which contain blueprints dedicated to a certain application. Consequent development for increased performance or supplements with new functions are ensured through software modifications, inherent to **ICF** control interface functions in the **OAH** open architecture system. Module examples described want to show the technological capability of achieving both modules and the real time control device of robots through virtual projection.

## Claims

1. The real time control method for robots in virtual projection, **characterized by** that in order to improve performance of the nano / micro / macro manipulators control and robots control, **in the absence of mechanical structure**, it ensures the projecting, testing and experimentation of the control method on a **(SCMC)** classic mechatronic control system (existing), without the need to modify its hardware structure, by going through the following phases in the control system development:

   (i) the virtual projection of the mechanical structure, mathematically determined, is made on the **(TGC)** graphic terminal of a computer, through a **(ICV)** virtual control interface, which allows the mathematical modeling for the graphic representation of the mechanical structure, and which consists of the graphic representation of the real and of reference movement trajectory, on each axis of the component elements, as well as of the real and reference forces, in the joints of the mechanical structure, a representation obtained by: (1) the interpretation of the $X_1^P$, $X_2^P$ ..... $X_m^P$ and $X_1^F$, $X_2^F$ ..... $X_m^F$ data generated by the measure (**TM1-TMm**), position and force transducers, coupled on the robot's actuators, and (2) of the reference signals of $X_R^P$ position and $X_R^F$ force for the robot control system;

   (ii) a database(s) is generated for the scaled storage of input signals, which would allow the visualization, in real time or in play-back with a modified speed of the details of the movement of the mechanical structure;

   (iii) the development of an **(OAH)** open architecture control system, composed of the **(SCMC)** robot classic control system in which the generation of the movement trajectory and of the forces is done through classic control methods, such as the Denevit-Hartenberg method and/or the teach-in method, to which a hybrid position-force control force is added;

   (iv) the **(OAH)** development of the control system with an open architecture by adding an interface with line tracing functions;

   (v) the **(OAH)** development of the open architecture control system by adding an interface with the robot's walking style such as the tripod walk at a walking robot;

   (vi) the **(OAH)** development of the open architecture control system by adding other interfaces with control methods such as the control of the weight center, the orientation through image adaptation;

(vii) generating $X_R^P$ position and $X_R^F$ force references at the (**SCMC**) classic robot control system by data exchange between the (**ICF1-ICFn**) interface control functions shown in the sequences (iii) - (vi) based on mathematical patterns such as the method of data inference, the fuzzy method;

(viii) the charge free functioning of the (**MS1-MSm**) robot's servo-actuator modules, which corresponds to the movement of a robot in state of imponderability, and the repetition of sequences (ii) - (vii) until the performance in the robot control, respectively the errors between the $X_R^P$ reference movements and the $X_1^P$, $X_2^P$..... $X_m^P$ movements resulted through virtual projection, enter the desired error range;

(ix) functioning with a constant charge of the (**MS1-MSm**) robot's servo-actuator modules, controlled by a (**MCS**) charge controller module and the repetition of sequences (ii) - (vii) until the performance in the robot control, respectively the errors between the $X_R^P$ reference movements and the $X_1^P$, $X_2^P$..... $X_m^P$ movements resulted through virtual projection, enter the desired error range;

(x) functioning with varying charge of the (**MS1-MSm**) robot's servo-actuator modules, which corresponds to a real movement of a robot with charge fluctuations due to the environment, controlled by a (**MCS**) charge controller module, by processing the $X_R^S$ signals with varying values generated based on previous measurements by the (ICMF) multi-function control module in correlation with the $X_R^P$ position and $X_R^F$ force references, with the repetition of sequences (ii) - (vii) until the performance in the robot control, respectively the errors between the $X_R^P$ reference movements and the $X_1^P$, $X_2^P$..... $X_m^P$ movements resulted through virtual projection, enter the desired error range.

**2.** The real time control devices for robots in virtual projection, **characterized by** that, in order to improve performance of the nano / micro / macro manipulators control and robots control, in the absence of mechanical structure, is made up of a (**ICV**) **virtual control interface module** with m inputs, the $X_m^P$ position and $X_m^F$ force signals, received from m (TM) measure transducers modules of the actuators, where m is the autonomy degrees of the robot, and the reference signals, $X_R^P$ position and $X_R^F$ force, received from the (**ICMF**) multi function control interface module, with the role of achieving the virtual projection of the mechanical structure on the (**TGC**) computer graphic terminal and the database(s) generation for the scaled storage of input signals, **a (TGC) computer graphic terminal** module receives the $X_m^P$ position and $X_m^F$ force information from the (**ICV**) virtual control interface module and through a software program ensures the graphic representation in the robot's moving space with the role of analysis of the movement of the mechanical structure and the adjustment of the control parameters of the (**SCMC**) classic mechatronic control system, a **number of m (TM) measure transducer modules** transform the $X_m^P$ positions on the m autonomy degrees and the $X_m^F$ forces in the m joints of the robot in measure signals and sends them to the (**ICV**) virtual control interface module, **a (SCMC) classic mechatronic control system** receives the $X_R^P$ position and $X_R^F$ force reference signals from the (ICMF) multi function control interface module, m signals of $X_m^P$ actual positions of the mechanic structure and m signals of $X_m^F$ actual forces in the joints of the mechanical structure and sends m control signals of the m (**MS**) servo-actuator modules, with the role of ensuring the robot real time control, a **number of m (MS) servo-actuator modules** with the role of ensuring the drive of the mechanical structure of the robot in the implementation phase, which receive control signals from the (**SCMC**) classic mechatronic control system, on which the m (**TM**) measure transducer modules are coupled, which are also rigidly coupled to m (**AS**) charge actuators, **a number of m (AS) charge actuator modules** rigidly coupled to the m (**MS**) servo-actuator modules, which receive control signals from a (**MCS**) charge controller module with the role to ensure the charge functioning of the m (**MS**) servo-actuator modules, a (**MCS**) charge controller module which receives the $X_R^P$ position and $X_R^F$ force reference, as well as a $X_R^S$ reference signal to generate the charges of the (**MS**) servo-actuator modules, from the (**ICMF**) multi function control interface with the role of ensuring the real time control and the charge functioning of the m (**MS**) charge actuator modules, **a (ICMF) multi function control interface module** which generates the $X_R^F$ force and $X_R^P$ position references to the (**SCMC**) classic mechatronic control system, ensures real time control, priority control and the management of the information exchange between a number of n (**ICF**) function control interfaces, connected between them through a (**MD**) field bus with high speed communication to which the communication with the (**SCMC**) classic mechatronic control system is added, with the role of ensuring, through (**ICF**) control interfaces functions, the implementation of various extra control methods as compared to those ensured by the (**SCMC**) classic mechatronic control system, based on mathematic modelling, such as the method of data inference, the fuzzy method, ensuring an (**OAH**) open architecture in the robot control, **a number of n (ICF) interface of function control** which ensure the development of a control system with open architecture by adding a number of n extra functions of control to the ones ensured by the (**SCMC**) classic mechatronic control system, communicate between them, together with the (**ICMF**) multi function control interface module, through a (**MD**) field bus with high speed communication with the role of allowing the implementation of various control methods such as the hybrid force-position control, line tracing functions, the tripod walk of a stepping robot respectively other control methods such as the centre weight control, orientation through image adaptation.

Fig.1. The real time control device for a robot in virtual projection

EP 2 105 263 A2

Fig.2. Virtual projection of a walking hexapod robot

**EP 2 105 263 A2**

## REFERENCES CITED IN THE DESCRIPTION

### Non-patent literature cited in the description

- Virtual assembly using virtual reality techniques. *Computer-Aided Design,* August 1997, vol. 29 (8), 575-584

- **A. C. K. Choi ; D. S. K. Chan ; M. F. Yuen.** Application of Virtual Assembly Tools for Improving Product. *The International Journal of Advanced Manufacturing Technology,* 15 March 2002, vol. 19 (5), ISSN 0268-3768, 377-383, 10.1007/s001700200027